# EUROPÄISCHE PATENTSCHRIFT

(11) **EP 4 370 283 B1**
(45) Veröffentlichungstag und Bekanntmachung des Hinweises auf die Patenterteilung: **24.12.2025**
(21) Anmeldenummer: 22741267.3
(22) Anmeldetag: 08.07.2022
(51) Int. Cl.: B25C 1/06, H01F 7/06, H02K 5/22, H02K 41/00, H02G 11/00

(54) **SETZGERÄT**
SETTING TOOL
OUTIL DE POSE

(30) Priorität: 10.07.2021 DE 102021003535
(43) Veröffentlichungstag der Anmeldung: 22.05.2024
(73) Patentinhaber: Rhefor GbR, 12203 Berlin (DE)
(72) Erfinder: MECKLENBURG, Arno, 10999 Berlin (DE)
(74) Vertreter: Hoffmann Eitle
(86) Internationale Anmeldenummer: PCT/EP2022/069084
(87) Internationale Veröffentlichungsnummer: WO 2023/285307

(56) Entgegenhaltungen:
- WO-A1-2020/259870
- DE-A1- 10 046 552
- JP-A- 2016 203 268

## Beschreibung

### Technisches Gebiet:

Die Erfindung betrifft Setzgeräte zum Setzen von Nägeln und Bolzen, bevorzugt handgeführte Setzgeräte zum Setzen von Nägeln und Bolzen. Mehr spezifisch betrifft die Erfindung ein Setzgerät gemäß dem Oberbegriff des Patentanspruchs 1. Ein derartiges Setzgerät geht beispielsweise aus der WO 2020/259870 A1 hervor.

### Hintergrund:

Es sind Setzgeräte mit elektrodynamischen Linearantrieben ("elektrodynamische Setzgeräte") bekannt, welche die repulsive Wechselwirkung zwischen einer ersten Erregerspule und einem beweglichen elektrischen Leiter ausnutzen, wobei der bewegliche elektrische Leiter direkt oder indirekt ein Eintreibelement antreibt. Bei dem beweglichen elektrischen Leiter kann es sich um einen Kurzschlussläufer handeln aber auch um eine zweite elektrische Spule, welche bevorzugt mit der ersten elektrischen Spule elektrisch parallel oder, besonders bevorzugt, in Reihe geschaltet ist.

Ein Überblick über den Stand der Technik kann den folgenden Druckschriften entnommen werden: US6830173B2, WO2018/104406, WO2021/001196, WO2020/126366, WO2019/233851, WO2019/233852, WO2019/233846, WO2019/233848, WO2019/233849, WO2019/234091, WO2019/233845, WO2019/233840, WO2019/233841, WO2019/233856, WO2019/233843, WO2019/233844, WO2021/122270, WO2021/122313, WO2021/122325, WO2021/122294, WO2021/122351, WO2021/122230, WO2021/122228, WO2020/259870.

### Zusammenfassung:

### Technisches Problem:

Nach einem Setzvorgang müssen der oder die beweglichen elektrischen Leiter in eine bekannte erste Ausgangslage zurückgestellt werden.

Für Setzgeräte mit beweglichen Spulen ist bekannt, die beweglichen Spulen mit Gleitkontakten zu kontaktieren. Diese unterliegen allerdings erheblichem Verschleiß und mindern mit ihrer Impedanz den Wirkungsgrad solcher Setzgeräte.

Die vorliegende Erfindung hat zur Aufgabe, bei Setzgeräten dieser Gattung nach einem Setzvorgang eine einfache Rückstellung des beweglichen elektrischen Leiters zu ermöglichen. Außerdem soll bei solchen Setzgeräten mit beweglicher elektrischer Spule eine direkte elektrische (d.h. galvanische) Kontaktierung der beweglichen Spule ermöglicht werden, und zwar ohne Schleifkontakte zu verwenden.

### Lösung:

Diese Aufgabe wird durch ein Setzgerät gemäß Anspruch 1 gelöst. Das Setzgerät umfasst: mindestens ein Gehäuse sowie einen elektrodynamischen Antrieb, wobei der elektrodynamische Antrieb wenigstens eine erste Erregerspule, einen beweglichen elektrischen Leiter, beispielsweise einen Kurzschlussläufer oder eine im Setzgerät beweglich angeordnete zweite Spule, ein Eintreibelement, ein Kabel, eine Spannvorrichtung für das mindestens eine Kabel, umfassend zumindest ein Federelement und ein Mittel zur Kraftumlenkung, wobei das mindestens eine Mittel zur Kraftumlenkung bevorzugt als bewegliche Rolle ausgebildet ist, welche weiter bevorzugt eine Nut zur Aufnahme des Kabels aufweist, einen Anschlag und einen Stator umfasst, gekennzeichnet dadurch, dass das Kabel einerseits direkt oder mittelbar am beweglichen elektrischen Leiter und andererseits direkt oder mittelbar am Gehäuse des Setzgerätes befestigt ist, und dass im Ruhezustand des Setzgerätes durch eine Vorspannung des Federelements das Kabel von der Spannvorrichtung gespannt wird, den beweglichen elektrischen Leiter in einer durch den Anschlag definierte Ruhelage gezogen zu halten, und wobei während eines Setzvorganges durch die Bewegung des beweglichen elektrischen Leiters das Federelement über das Kabel weiter gespannt wird, wonach (d.h. nach dem Setzvorgang) das Federelement wieder bis auf eine Vorspannung ausfedert und den beweglichen elektrischen Leiter in seine Ruhelage zurück zieht.

Eine reduzierte Masse der Spannvorrichtung einschließlich des Kabels beträgt dabei bevorzugt höchstens die Hälfte und bevorzugt höchstens ein Viertel der Summe der Massen von beweglichem elektrischen Leiter und Eintreibelement. Die reduzierte Masse kann durch m_{red} = m₁ m₂ / (m₁ + m₂) der Einzelmassen der Spannvorrichtung, z.B. als harmonisches Mittel der Einzelmassen repräsentiert werden. Die vom Antrieb verrichtete Arbeit zeigt sich überwiegend als kinetische Energie, aufgeteilt auf die Kolbenmasse (inkl. elektrischer Leiter) und die reduzierte Masse m_{red} der Spannvorrichtung.

Das Setzgerät ist bevorzugt ein handgeführtes Setzgerät.

Ferner wird ein Kabel für das erfindungsgemäße Setzgerät, bei dem der bewegliche elektrische Leiter als beweglich angeordnete zweite Spule ausgebildet ist, offenbart, wobei das Kabel zumindest zweiadrig ist und ein oder mehrere Mittel zur radialen Zugentlastung aufweist, beispielsweise in Gestalt einer Ummantelung des Kabels, zur Aufnahme repulsiver Lorentzkräfte zwischen den mindestens beiden Adern. Dabei müssen die Adern bevorzugt möglichst dicht beisammen liegen, so dass die Selbstinduktion der Leitung nicht den Wirkungsgrad des Antriebs kompromittiert, weil dessen initiale Selbstinduktion (Startposition) sehr gering ist, da sich die Eigeninduktionen beider Spulen weitgehend kompensieren.

Das Kabel weist ferner bevorzugt eine axiale Zugentlastung auf, welche direkt oder mittelbar am Gehäuse des Setzgerätes sowie an der beweglichen zweiten Spule befestigt werden kann. Dadurch kann ein Längen der Adern (bevorzugt hochflexible Litze) vermieden werden. Mit anderen Worten kann somit vermieden werden, dass die elektrischen Leiter (Adern) selbst die erheblichen Zugkräfte aufnehmen müssen.

Das Kabel ist ferner bevorzugt dadurch gekennzeichnet, dass seine Impedanz geringer ist, und bevorzugt mindestens um das Fünffache geringer ist, als die Impedanz einer Reihenschaltung der ersten Erregerspule und der beweglichen elektrischen Spule, wenn sich der Antrieb in seiner Ruhelage befindet. Dadurch kann die Blindenergie auf ein akzeptables Maß reduziert werden. Insbesondere kann vermieden werden, dass die Setzenergie mit der von der Zuleitung eingeschlossenen Fläche (bei gleicher Leiterlänge) reduziert wird.

### Kurze Beschreibung der Zeichnungen:

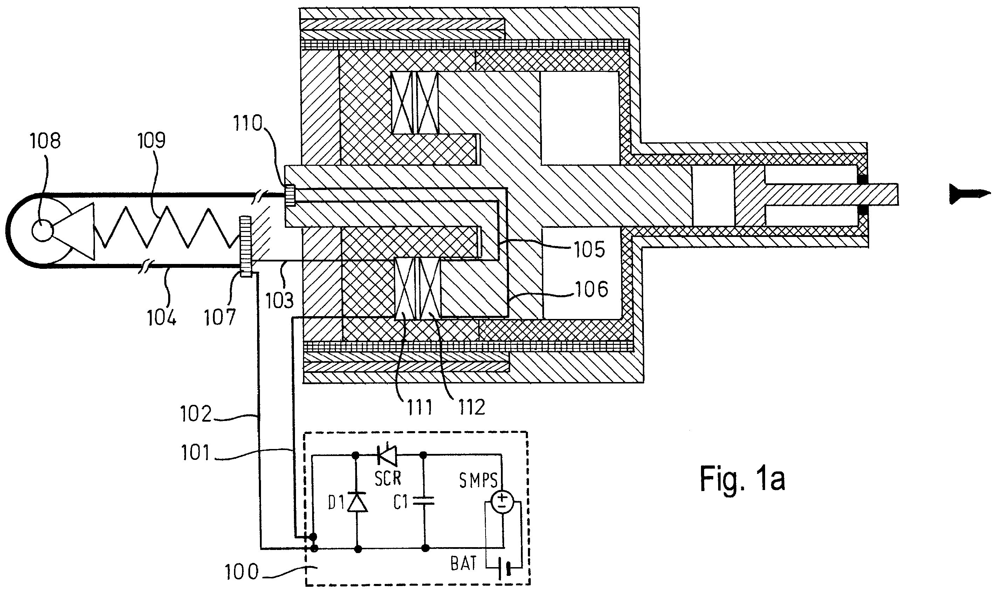

Fig. 1a zeigt ein Ausführungsbeispiel eines Antriebs in seiner Ruhelage.

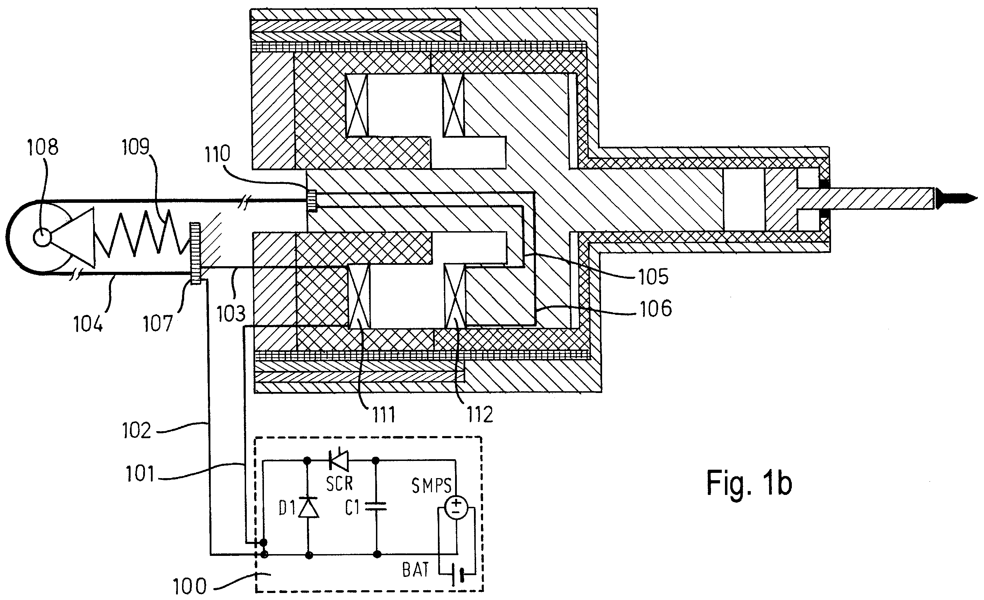

Fig. 1b zeigt ein Ausführungsbeispiel des Antriebs während eines Setzvorganges mit stärker gespannter Feder.

### Detaillierte Beschreibung:

Die Erfindung kann ausgehend von den allgemein bekannten "BX-3"-Nagelsetzgeräten des Herstellers HILTI verstanden werden, deren grundlegende Arbeitsweise bspw. der DE 10 2005 000 089 A1 zu entnehmen ist. Diese Geräteklasse spannt zunächst Federn mit Hilfe eines elektrischen Motors. Zum Setzen wird eine Entriegelung betätigt, wodurch die Federn sich schlagartig entspannen und das Eintreibelement antreiben können.

Dabei treiben in BX-3-Geräten die Federn das Eintreibelement nicht etwa unmittelbar an sondern über eine Transmission, welche von einem Rollenzugmechanismus gebildet wird (im angelsächsischen Sprachraum als "spring belt mechanism" bekannt gemacht). Während eines Setzvorganges entspannen sich also in BX-3-Geräten die Federn und potentielle Energie aus den Federn wird - zunächst - über einen Rollenzug in kinetische Energie des Eintreibelements umgewandelt.

Die vorliegende Erfindung funktioniert genau entgegengesetzt.

Ein erfindungsgemäßes Setzgerät umfasst mindestens
ein Gehäuse;
einen Antrieb, umfassend mindestens:
   - eine erste Erregerspule;
   - einen beweglichen elektrischen Leiter, beispielsweise einen Kurzschlussläufer oder eine im Setzgerät beweglich angeordnete Spule;
   - ein Eintreibelement (z.B. ein Setzkolben);
   - ein Kabel;
   - eine Spannvorrichtung für das mindestens eine Kabel, umfassend zumindest ein Federelement, wobei die Feder beispielsweise eine Schraubendruckfeder, eine Wellenringfeder oder eine Gasfeder sein kann;
   - einen Kondensator;
   - einen Anschlag; und
   - einen Stator.

Dabei ist der Begriff des Kabels weit auszulegen, vorliegend sind auch Seile, Gurte, Riemen, Bänder und Ketten als Kabel aufzufassen.

Unter einem Eintreibelement, welches als nach Art eines Kolbens gestaltet sein kann, ist vorliegend ein im Setzgerät beweglich angeordneter Körper zu verstehen, welcher direkt oder mittelbar durch eine auf den beweglichen elektrischen Leiter wirkende Lorentzkraft beschleunigt werden kann, um auch mit dessen kinetischer Energie (und nicht nur der kinetischen Energie des beweglichen elektrischen Leiters) direkt oder mittelbar einen Nagel zu setzen.

Das Kabel ist einerseits direkt oder mittelbar am beweglichen elektrischen Leiter befestigt und andererseits direkt oder mittelbar am Gehäuse des Setzgerätes befestigt, wobei es von der Spannvorrichtung gespannt wird, welche nach Art eines Rollenzuges ausgebildet sein kann. Die Spannvorrichtung ist dabei so angeordnet, dass sie kraft des Federelements den beweglichen elektrischen Leiter mittels des mindestens einen Kabels in eine erste Ausgangslage (die Ruhelage) zu ziehen vermag, in welcher der Anschlag wirksam wird und in welcher der Abstand des beweglichen elektrischen Leiters zur ersten Erregerspule minimal ist. Der Anschlag kann verstellbar und beispielsweise als Schraube ausgebildet sein. Er kann aber auch fix sein und beispielsweise von der ersten Erregerspule, deren Vergussmasse, dem Stator selbst oder dem Gehäuse oder am Gehäuse befestigten Teilen wie bspw. einer elektromagnetischen Abschirmung gebildet werden.

### Ausführungsbeispiel

Zum besseren Verständnis wird die Erfindung nachfolgend anhand eines Beispiels erläutert. Diese Erläuterung soll keinesfalls einschränkend verstanden werden sondern lediglich dem besseren Verständnis der Erfindung dienen.

Fig. 1a zeigt beispielsweise ein Ausführungsbeispiel eines Antriebs in seiner Ruhelage mit erster Erregerspule 111 und einer zugeordneten beweglichen Spule 112.

Die Zeichnung kann ausgehend von der Beschreibung der WO2020259870 und dort der Fig. 7 verstanden werden. Dieser Antrieb umfasst einen Eisenkreis (auch "Flusskonzentrator"), also ein Körper aus weichmagnetischem Material. Stark bevorzugt weist der Eisenkreis eine Sättigungsflussdichte von zumindest 1T, bevorzugt zumindest 1,5T und weiter bevorzugt mindestens 1,9T auf sowie insbesondere eine effektive elektrische Leitfähigkeit von höchstens 10 6S/m, weiter bevorzugt höchstens 10 5S/m und weiter bevorzugt höchstens 10 4S/m; verschiedene weichmagnetische Kompositwerkstoffe erfüllen diese Voraussetzungen. Wegen deren Sprödigkeit wird bevorzugt ein weichmagnetischer Kompositwerkstoff für Eisenkreis verwendet, der ggf. fachmännisch segmentiert wird um ein Reißen zu vermeiden. Die Segmentierung dient also dem Zweck, ein lokales Überschreiten der Zugfestigkeit (und bevorzugt auch der Streckgrenze) des weichmagnetischen Kompositwerkstoffs während eines Setzvorgangs zu unterbinden.

Der Antriebskolben ist bevorzugt ganz oder überwiegend aus einem Kunststoff gebildet, insbesondere einem glasfasergefüllten Flüssigkristallpolymer, der ausgebildet sein kann, wenigstens eine Führungsachse aufzuweisen. Weiter bevorzugt ist der Antriebskolben ganz oder teilweise aus einer technischen Keramik gebildet, welche eine hohe mechanische Zähigkeit, hohe thermische Leitfähigkeit jedoch geringe elektrische Leitfähigkeit aufweist wie beispielsweise beta-Si3N4 aber auch kurzfaserverstärktes SiSiC.

Der Antrieb weist bevorzugt einen Setzkolben mit Kolbenstange auf, wobei Eintreibenergie über die Kolbenstange von Setzkolben auf den Nagel übertragen wird.

Eine Bodenplatte besteht bevorzugt aus weichmagnetischem Vollmaterial, insbesondere einem ferritischen Stahl, dies dient der Abschirmung (EMV, EMVU) und als Wärmesenke.

Ein Rohr aus CFK, dient bevorzugt der Zugentlastung des Eisenkreis sowie der Zentrierung.

Ferner kann ein Rohr aus einer Aluminiumlegierung vorgesehen werden, welches bevorzugt eine möglichst hohe elektrische Leitfähigkeit aufweist, und die vorliegend der Abschirmung elektromagnetischer Wechselfelder dient.

Das rohrförmig ausgebildete weichmagnetische Material wiest bevorzugt eine hohe Sättigungsflussdichte auf, uns besteht insbesondere aus ferritischem Stahl. Dieses dient der Abschirmung elektromagnetischer Gleichfelder.

Um mit der in Fig. 1a symbolisch dargestellten Anordnung einen Nagel oder Bolzen in einen Untergrund zu setzen, wird zunächst Kondensator CI über Schaltwandler SMPS aufgeladen (bei einem akkubetriebenen Setzgerät natürlich mit Hilfe elektrischer Energie aus dem oder den Akkumulatoren BAT). Der Kondensator CI sollte eine möglichst hohe Energiedichte und einen möglichst geringen elektrischen Reihenwiderstand sowie eine besonders hohe Kurzschlussfestigkeit aufweisen. Entsprechende Kondensatoren sind als Folienkondensatoren speziell für Impulsanwendungen kommerziell verfügbar.

Nach Erreichen der gewünschten Ladespannung über C1 kann zum Setzen eines Nagels der Thyristor SCR gezündet werden. Nun fließt Strom über die Adern in die Erregerspule und den beweglichen elektrischen Leiter (Kurzschlussläufer oder Spule). Beide sind bevorzugt in Reihe geschaltet, und zwar so, dass der Strom in der Erregerspule und dem beweglichen elektrischen Leiter beim Setzvorgang gegensinnig fließt, sie stoßen sich also ab. Für die Spulen kommt zum Erreichen eines möglichst hohen Füllgrads bei minimalem elektrischen Widerstand Cu-Flachdraht besonders infrage.

Die Adern (Zuleitungen) 101 und 103 können hierbei direkt durch den Kolben bzw. dessen (hintere) "Führungsachse" geführt werden; stark bevorzugt bestehen die Zuleitungen aus einer Aluminiumlegierung oder Kupfer, insbesondere in Gestalt feiner, hochflexibler Litzen, und sind außerhalb des Kolbens 720 zugentlastet, beispielsweise mit Hilfe von Kohlefasern bzw. Kohlefasergewebe: Maßgeblich ist, dass die mit den Zuleitungen mechanisch parallel geschaltete Zugentlastung aus einem Material hinreichender Zugfestigkeit besteht - also unter den gegebenen Bedingungen nicht reißt - und ein höheres Zugmodul aufweist als die elektrischen Zuleitungen selbst, die es entlasten soll. Die Zugentlastung wird dabei vorzugsweise bemessen, die elektrischen Leiter vor einer Zugbeanspruchung (während oder infolge eines Setzvorgangs) zu schützen, die deren Streckgrenze oder gar Zugfestigkeit überschreitet. Weiter bevorzugt soll das Material der Zugentlastung eine hohe spezifische Festigkeit aufweisen. Kohlefasern sowie deren Gewebe können diese Voraussetzungen erfüllen. Der Antriebskolben (erster Kolben) kann dahingehend ausgebildet sein, mit Setzkolben (zweiter Kolben) und Zylinder eine Entkopplungsvorrichtung zu bilden.

Kondensator C1 kann mit Hilfe des Schaltwandlers SMPS aus einer Batterie, insbesondere einem Lithium-Ionen-Akkumulator, aufgeladen und vermittels des Thyristors SCR über die Adern 101 und 102 über den Antrieb entladen werden, welcher ausgeprägt ohmsch-Induktives Verhalten zeigt, weshalb eine Freilaufdiode D1 vorgesehen ist.

Ader 101 wird an den Eingang der ersten Erregerspule 111 geführt, welche am topfförmig ausgebildeten Stator angeordnet und befestigt ist. Der Fachmann versteht eine Ader als eine einzelne elektrische Leitung (z.B. im Vergleich zu Vielzahl an Adern in einem Kabel). Eine Ader ist zum Beispiel eine Litze.

Vom Ausgang der Spule wird die Ader als Ader 103 zu einer Zugentlastung 107 geführt. Ader 102 wird direkt von der Stoßstromversorgung 100 zur Zugentlastung 107 geführt.

Beide Adern werden sodann in einem gemeinsamen Kabel 104 geführt, welches form-, kraft- oder stoffschlüssig mit Zugentlastung 107 verbunden ist, sodass ein Einleiten mechanischer Zugspannungen in der ersten Erregerspule 111 und Stoßstromversorgung 100 unterbunden oder wenigstens vermindert wird.

Kabel 104 weist zumindest zwei im Betrieb wenigstens zeitweise stromführende Adern auf, welche bevorzugt aus hochflexibler Cu- oder Al-Litze und/oder aus ein- oder, bevorzugt, mehrlagigen Metallfolien oder Metallfilmen bestehen - eben die weitergeführten Adern 102 und 103. Besteht eine Ader aus mehrlagigem Metallfilm oder mehrlagiger Metallfolie, so sind die einzelnen Lagen bevorzugt gegen einander isoliert, beispielsweise durch ein elastomeres Polymer.

Adern 105 und 106 sind bevorzugt zugentlastet, um das Einleiten von Zugspannungen in die bewegliche Spule zu reduzieren. Bevorzugt werden sie innerhalb der Ankerstange zur Spule geführt, um Kippmomente (am Kolben) zu vermeiden. Weiter bevorzugt werden sie noch innerhalb der Kolbenstange zusätzlich vergossen oder verklebt.

Kabel 104 ist dahingehend ausgestaltet, dass Adern 102 und 103 zuverlässig gegeneinander elektrisch isoliert sind. Außerdem weist Kabel 104 eine eigene radiale Zugentlastung auf:
Die radiale Zugentlastung nimmt die während der Bestromung des Antriebs auftretende abstoßende Kräfte zwischen Adern 102 und 103 auf und besteht beispielsweise darin, dass das Kabel mit zugfestem Gewebe umsponnen ist. Zusätzlich kann auf das Kabel noch ein abriebfester Schlauch aufgeschrumpft oder plattiert sein.

Darüber hinaus kann Kabel 104 eine eigene axiale Zugentlastung umfassen. Eine solche intrinsische axiale Zugentlastung von Kabel 104 kann beispielsweise aus einer dritten Ader aus zugfestem Gewebe oder zugfester Litze bestehen, welche stark bevorzugt ein höheres Zugmodul aufweist als das oder die für Adern 102 und 103 ausgewählten metallischen Leiter. Diese axiale Zugentlastung kann mit Zugentlastung 107 verbunden sein, sodass auftretende Zugkräfte nicht ganz oder überwiegend über die Adern 102 und/oder 103 übertragen werden müssen.

Kabel 104 wird sodann über eine entlang der Setzrichtung beweglich angeordnete Kraftumlenkung geführt, welche im Beispiel aus einer Rolle 108 besteht. Es könnte anstelle einer Rolle aber auch beispielsweise eine Kurvenscheibe verwendet werden, auf welcher Kabel 104 zu gleiten vermag. Im Beispiel ist es wie gesagt eine Rolle, welche eine Nut zur Aufnahme des Kabels aufweisen kann, und in welcher das Kabel zum Liegen kommt. Alternativ kann die Rolle 108 im Gegensatz zu einer Nut eine Wölbung nach außen aufweisen und vom dann als Riemen ausgebildeten Kabel 104 selbstzentrierend umschlungen werden.

Auf Seiten des Antriebs ist Kabel 104 mit Zugentlastung 110 verbunden. Diese muss keineswegs als diskretes Bauteil ausgebildet sein sondern kann beispielsweise auch darin bestehen, dass das Kabel 104 mit dem Kolben oder einem anderen mit der beweglichen Spule 112 verbundenen Bauteil verklebt oder anderweitig mechanisch (form-, stoff- oder kraftschlüssig) verbunden ist.

Ausgehend von der Zugentlastung 110 werden die beiden elektrischen Adern von Kabel 104 mit Ein- und Ausgang der beweglichen Spule 112 verbunden. Dies ermöglicht in einfacher Weise eine elektrische Reihenschaltung von Statorspule 111, also der ersten Erregerspule, und beweglicher Spule 112, wobei diese derart in Reihe geschaltet sind, dass sie bei einer Entladung von Kondensator C1 gegensinnig bestromt werden. Eine solche Serienschaltung ist vorteilhaft, eine Parallelschaltung ist aber ebenfalls möglich.

Federelement 109, beispielsweise eine Spiraldruckfeder, Wellringfeder oder Gasfeder, spannt über die bewegliche Rolle 108 das Kabel 104 und vermag, solange keine Setzung stattfindet, über den Kolben den beweglichen elektrischen Leiter, also die bewegliche zweite Spule 112, in die in Fig. 1a gezeigte Anfangsposition zu ziehen.

Während eines Setzvorganges stoßen sich zunächst erste Erregerspule 111 und bewegliche zweite Spule 112 gegenseitig ab, wodurch über Kabel 104 Kraft auf Rolle 108 übertragen wird, Federelement 109 zu spannen. Nach Art eines Rollenzuges findet hierbei eine Untersetzung dahingehend statt, dass sich Rolle 108 nur, entsprechend dem Untersetzungsverhältnis, mit (näherungsweise) der halben Geschwindigkeit bewegt wie der bewegliche elektrische Leiter.

Fig. 1b zeigt zum besseren Verständnis den gleichen Antrieb schematisch während eines Setzvorganges mit stärker gespannter Feder.

Nach Abschluss des Setzvorganges wird der bewegliche elektrische Leiter, vorliegend die zweite Spule 112, über Kabel 104 bis zum Anschlag in seine in Fig. 1a gezeigte Ausgangsposition zurückgezogen.

## Patentansprüche

1. Setzgerät, umfassend:
mindestens ein Gehäuse sowie einen elektrodynamischen Antrieb, wobei der elektrodynamische Antrieb wenigstens umfasst:
- eine erste Erregerspule (111);
- einen beweglichen elektrischen Leiter (112);
- ein Eintreibelement;
- ein Kabel (104); und **gekennzeichnet, durch**
- eine Spannvorrichtung für das mindestens eine Kabel, umfassend zumindest ein Federelement (109) und ein Mittel zur Kraftumlenkung (108); und
- einen Anschlag;
wobei das Kabel (104) einerseits direkt oder mittelbar am beweglichen elektrischen Leiter (112) und andererseits direkt oder mittelbar am Gehäuse des Setzgerätes befestigt ist, und dass im Ruhezustand des Setzgerätes durch eine Vorspannung des Federelements (109) das Kabel von der Spannvorrichtung gespannt wird, den beweglichen elektrischen Leiter in einer durch den Anschlag definierte Ruhelage gezogen zu halten, und wobei während eines Setzvorganges durch die Bewegung des beweglichen elektrischen Leiters (112) das Federelement (109) über das Kabel (104) weiter gespannt wird, wonach das Federelement wieder bis auf eine Vorspannung ausfedert und den beweglichen elektrischen Leiter in seine Ruhelage zurückzieht.

2. Setzgerät gemäß Anspruch 1, **dadurch gekennzeichnet, dass** eine reduzierte Masse der Spannvorrichtung einschließlich des Kabels höchstens die Hälfte und bevorzugt höchstens ein Viertel der Summe der Massen von beweglichem elektrischen Leiter und Eintreibelement beträgt.

3. Setzgerät gemäß Anspruch 1 oder 2, wobei das Setzgerät ein handgeführtes Setzgerät ist.

4. Setzgerät nach einem der Ansprüche 1 - **3,** wobei der bewegliche elektrische Leiter (112) ein Kurzschlussläufer oder eine im Setzgerät beweglich angeordnete zweite Spule ist.

5. Setzgerät nach einem der Ansprüche 1 - 4, wobei das Mittel zur Kraftumlenkung (108) als eine bewegliche Rolle ausgebildet ist.

6. Setzgerät nach Anspruch **5,** wobei die bewegliche Rolle eine Nut zur Aufnahme des Kabels aufweist.

## Claims

1. Setting tool, comprising:
at least one housing and an electrodynamic drive, wherein the electrodynamic drive comprises at least:
- a first excitation coil (111);
- a movable electrical conductor (112);
- a driving element;
- a cable (104); and **characterised by**
- a clamping device for the at least one cable, comprising at least one spring element (109) and a means of force deflection (108); and
- a stop;
wherein the cable (104) is on the one hand attached directly or indirectly to the movable electrical conductor (112) and on the other hand attached directly or indirectly to the housing of the setting tool, and that in the idle state of the setting tool the cable is clamped by the clamping device through a preloading of the spring element (109) to keep the movable electrical conductor pulled into a resting position defined by the stop, and wherein, during a setting process, the spring element (109) is further tensioned via the cable (104) through the movement of the movable electrical conductor (112), after which the spring element rebounds to a preload and pulls the movable electrical conductor back to its resting position.

2. Setting tool according to claim 1, **characterised in that** a reduced mass of the clamping device, including the cable, is at most half and preferably at most a quarter of the sum of the masses of the movable electrical conductor and the driving member.

3. Setting tool according to claim 1 or 2, wherein the setting tool is a handheld setting tool.

4. Setting tool according to one of the claims 1 - 3, wherein the movable conductor (112) is a squirrel cage rotor or a second coil arranged movably in the setting tool.

5. Setting tool according to one of the claims 1 - 4, wherein the means of force deflection (108) is designed as a movable roller.

6. Setting tool according to claim 5, wherein the movable roller has a groove for receiving the cable.

## Revendications

1. Outil de pose, comprenant :
au moins un boîtier ainsi qu'un entraînement électrodynamique, dans lequel l'entraînement électrodynamique comprend au moins :
- une première bobine d'excitation (111) ;
- un conducteur électrique mobile (112) ;
- un élément d'enfoncement ;
- un câble (104) ; et
**caractérisé en ce que**
- un dispositif de tension pour ledit au moins un câble, comprenant au moins un élément à ressort (109) et un moyen de déviation de force (108) ; et
- une butée ;
dans lequel le câble (104) est fixé d'une part directement ou indirectement sur le conducteur électrique mobile (112) et, d'autre part, directement ou indirectement sur le boîtier de l'outil de pose, et **en ce que**, à l'état de repos de l'outil de pose, le câble est tendu par le dispositif de tension grâce à une précontrainte de l'élément à ressort (109), pour maintenir le conducteur électrique mobile tiré dans une position de repos définie par la butée, et dans lequel, pendant une opération de pose, le déplacement du conducteur électrique mobile (112) permet de continuer à tendre l'élément à ressort (109) par le câble (104), après quoi l'élément à ressort revient à nouveau à un état de tension préalable et ramène le conducteur électrique mobile dans sa position de repos.

2. Outil de pose selon la revendication 1, **caractérisé en ce qu'**une masse réduite du dispositif de tension, y compris du câble, ne dépasse pas la moitié et de manière préférée un quart de la somme des masses du conducteur électrique mobile et de l'élément d'enfoncement.

3. Outil de pose selon la revendication 1 ou la revendication 2, dans lequel l'outil de pose est un outil de pose à guidage manuel.

4. Outil de pose selon l'une des revendications 1 à 3, dans lequel le conducteur électrique mobile (112) est un rotor de court-circuit ou une deuxième bobine disposée de manière mobile dans l'outil de pose.

5. Outil de pose selon l'une des revendications 1 à 4, dans lequel le moyen de déviation de force (108) est réalisé sous la forme d'un rouleau mobile.

6. Outil de pose selon la revendication 5, dans lequel le rouleau mobile présente une rainure pour recevoir le câble.
